# EUROPEAN PATENT APPLICATION

(11) **EP 4 574 526 A1**
(43) Date of publication of application: **25.06.2025**
(21) Application number: 23218434.1
(22) Date of filing: 20.12.2023
(51) Int. Cl.: B60L 7/12, B60L 7/14, B60L 50/71, B60L 50/75, B60L 58/15, B60L 58/30, B60L 58/40, B60L 1/00, B60L 3/00, H01M 8/0432

(54) **ENABLING PROLONGED ENDURANCE BRAKING**

(71) Applicant: VOLVO TRUCK CORPORATION, 405 08 Göteborg (SE)
(72) Inventor: WILHELMSSON, Martin, 423 39 TORSLANDA (SE); LAINE, Leo, 414 84 GÖTEBORG (SE); STJERNBERG, Oscar, 411 35 GÖTEBORG (SE); KVIST, Roland, 360 42 BRAÅS (SE)
(74) Representative: Ström & Gulliksson AB

(57) **Abstract**

A method is disclosed for enabling prolonged endurance braking for a vehicle comprising one or more electric motor(s) and a fuel cell arrangement configured to drive the electric motor(s).

The method comprises - during braking by the electric motor(s) - transferring, from the electric motor(s) to the fuel cell arrangement, electric energy or power generated by the electric motor(s) during the braking, and dispatching the transferred electric energy or power by causing the fuel cell arrangement to perform electrolysis driven by the transferred electric energy or power.

In some examples, electric energy or power generated by the electric motor(s) during the braking is transferred from the electric motor(s) to the fuel cell arrangement only when an energy storing system of the vehicle is unable to receive the generated electric energy or power for storage.

Corresponding computer program product, non-transitory computer-readable storage medium, computer system, vehicle sub-system, and vehicle are also disclosed.

## Description

### TECHNICAL FIELD

The disclosure relates generally to vehicle control. In particular aspects, the disclosure relates to enabling prolonged endurance braking. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When a vehicle is subjected to continuous braking during a relatively long time interval (e.g., in a downhill scenario), it is a common problem that the functioning of the braking devices is negatively affected. For example, the braking devices may become overheated and may need to be cooled down before they can provide adequate braking. Alternatively or additionally, the wear on the braking devices may be excessive and lead to a shortened life span of the braking devices.

Endurance braking may be applied to mitigate these negative effects and prolong the time interval during which braking can be properly applied. However, there are circumstances for which known endurance braking approaches are not sufficient. For example, when traveling among a road passage comprising a long downhill portion, it may become difficult to maintain sufficient braking performance during a sufficiently long period of time since the service brakes will eventually become overheated. One way to mitigate this problem is to significantly lower the vehicle speed to render the braking requirements less demanding, but using a very low speed may be not desirable, and/or unsafe w.r.t. the traffic situation.

Typically, this can lead to that it is cumbersome to provide consistent braking during a relatively long time interval.

### SUMMARY

According to a first aspect of the disclosure, a method is provided for enabling prolonged endurance braking for a vehicle, wherein the vehicle comprises one or more electric motor(s) and a fuel cell arrangement configured to drive the electric motor(s). The method comprises - during braking by the electric motor(s) - transferring (from the electric motor(s) to the fuel cell arrangement) electric energy or power generated by the electric motor(s) during the braking, and dispatching the transferred electric energy or power by causing the fuel cell arrangement to perform electrolysis driven by the transferred electric energy or power. The first aspect of the disclosure may seek to disperse at least some of the energy generated by using the electric motor(s) for braking, which is accomplished by transferring and dispatching energy or power as specified above. A technical benefit may include that there is less heating of the electric motor(s) and a time interval during which it is possible to provide consistent braking by the electric motor(s) is prolonged.

Optionally in some examples, including in at least one preferred example, the dispatching of the transferred electric energy or power may comprise detecting energy or power transfer towards the fuel cell arrangement, and triggering the electrolysis responsive to the detection.

Optionally in some examples, including in at least one preferred example, performing the electrolysis may comprise converting water to oxygen and hydrogen. A technical benefit may include that energy dispersion may be achieved based on a safe and easily available input substance, and/or that a fuel cell arrangement already available for hydrogen drive of the vehicle may be utilized.

Optionally in some examples, including in at least one preferred example, the method may further comprise supplying the water from an on-board water tank. A technical benefit may include that availability of the input substance may be guaranteed to a relatively large extent.

Optionally in some examples, including in at least one preferred example, the method may further comprise using water vapor from default operation of the fuel cell arrangement to supply the water. A technical benefit may include that availability of the input substance may be guaranteed to a relatively large extent. Furthermore, the purity of the input material may be guaranteed to a relatively large extent (e.g., 99.999%)

Optionally in some examples, including in at least one preferred example, the method may further comprise storing the oxygen and/or the hydrogen in corresponding tank(s). A technical benefit may include that availability of the input substances for default operation of the fuel cell arrangement may be guaranteed to a relatively large extent, and/or that the hydrogen is safely handled.

Optionally in some examples, including in at least one preferred example, the method may further comprise using the stored oxygen and/or hydrogen for default operation of the fuel cell arrangement. A technical benefit may include that manual filling of hydrogen is needed less often, and/or that the default operation of the fuel cell arrangement becomes more efficient than if air was used as an input substance.

Optionally in some examples, including in at least one preferred example, the method may further comprise using the stored oxygen to drive hydraulics of the vehicle. A technical benefit may include that the hydraulics can be efficiently and/or instantly operated without a separate procedure of air pressurizing specifically dedicated for the hydraulics.

Optionally in some examples, including in at least one preferred example, the method may further comprise - during braking by the electric motor(s) - transferring (from the electric motor(s) to an energy storing system of the vehicle) electric energy or power generated by the electric motor(s) during the braking. In such examples, the transferring (from the electric motor(s) to the fuel cell arrangement) of electric energy or power generated by the electric motor(s) during the braking may be applied for (e.g., only for) generated electric energy or power that the energy storing system is unable to receive for storage. A technical benefit may include that even more of the energy generated by using the electric motor(s) for braking can be dispersed, and the time interval during which it is possible to provide consistent braking by the electric motor(s) is even further prolonged.

Optionally in some examples, including in at least one preferred example, the method may be controlled by processing circuitry of a computer system. A technical benefit may include convenient and flexible automation of the energy dispersal.

According to a second aspect of the disclosure, a computer program product is provided. The computer program product comprises program code for performing, when executed by processing circuitry, the method of the first aspect.

According to a third aspect of the disclosure, a non-transitory computer-readable storage medium is provided. The non-transitory computer-readable storage medium comprises instructions, which when executed by processing circuitry, cause the method of the first aspect to be performed.

The second and/or third aspect of the disclosure may seek to convey program code for prolonging a time interval during which it is possible to provide consistent braking by the electric motor(s). A technical benefit may include that new vehicles and/or legacy vehicles may be conveniently configured, by software installation/update, to disperse of at least some of the energy generated by using the electric motor(s) for braking.

According to a fourth aspect of the disclosure, a computer system is provided for enabling prolonged endurance braking for a vehicle, wherein the vehicle comprises one or more electric motor(s) and a fuel cell arrangement configured to drive the electric motor(s). The computer system comprises processing circuitry configured to cause - during braking by the electric motor(s) - transfer (from the electric motor(s) to the fuel cell arrangement) of electric energy or power generated by the electric motor(s) during the braking, and dispatch of the transferred electric energy or power by causing the fuel cell arrangement to perform electrolysis driven by the transferred electric energy or power. The fourth aspect of the disclosure may seek to automate dispersal of at least some of the energy generated by using the electric motor(s) for braking. A technical benefit may include that there is less heating of the electric motor(s) and a time interval during which it is possible to provide consistent braking by the electric motor(s) is automatically prolonged.

According to a fifth aspect of the disclosure, a vehicle sub-system is provided for enabling prolonged endurance braking for a vehicle, wherein the vehicle comprises one or more electric motor(s) and a fuel cell arrangement configured to drive the electric motor(s). The vehicle sub-system comprises a transfer network configured to transfer (from the electric motor(s) to the fuel cell arrangement) electric energy or power generated by the electric motor(s) during braking by the electric motor(s), and an energy or power dispatcher configured to cause the fuel cell arrangement to perform electrolysis driven by the transferred electric energy or power. The fifth aspect of the disclosure may seek to provide a functional structure for dispersal of at least some of the energy generated by using the electric motor(s) for braking. A technical benefit may include that mitigation of heating of the electric motor(s) is enabled and a time interval during which it is possible to provide consistent braking by the electric motor(s) is prolonged.

Optionally in some examples, including in at least one preferred example, the vehicle sub-system may further comprise one or more of the electric motor(s), the fuel cell arrangement, an on-board water tank for supplying water to be converted to oxygen and hydrogen by the electrolysis, and respective tank(s) for storing oxygen and/or hydrogen produced by the electrolysis.

Optionally in some examples, including in at least one preferred example, the vehicle sub-system may further comprise an energy storing system, wherein the transfer network is further configured to transfer (from the electric motor(s) to the energy storing system of the vehicle) electric energy or power generated by the electric motor(s) during the braking, and to transfer (from the electric motor(s) to the fuel cell arrangement) only electric energy or power generated by the electric motor(s) during the braking that the energy storing system is unable to receive for storage.

According to a sixth aspect of the disclosure, a vehicle is provided. The vehicle comprises the computer system of the fourth aspect and/or the vehicle sub-system of the fifth aspect. The sixth aspect of the disclosure may seek to provide a vehicle with prolonged endurance braking.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a flowchart illustrating a method according to some examples.
**FIG. 2** is a schematic drawing illustrating a vehicle according to some examples.
**FIG. 3** is a schematic drawing illustrating a vehicle sub-system according to some examples.
**FIG. 4A** is a schematic block diagram illustrating various flows during default operation of the fuel cell arrangement according to some examples.
**FIG. 4B** is a schematic block diagram illustrating various flows during operation of the fuel cell arrangement for prolonged endurance braking according to some examples.
**FIG. 5** is a schematic diagram illustrating a computer system for implementing examples disclosed herein according to some examples.
**FIG. 6** is a schematic drawing illustrating a computer program product in the form of a non-transitory computer-readable storage medium according to some examples.
**FIG. 7** is a schematic block diagram of a control unit according to some examples.

### DETAILED DESCRIPTION

The detailed description set forth below provides information and examples of the disclosed technology with sufficient detail to enable those skilled in the art to practice the disclosure.

Generally, when energy is referred to herein, it should be noted that the reference is interchangeable by a reference to power, and vice versa.

When a vehicle is subjected to continuous braking during some time interval, it is a common problem that the functioning of the braking devices is negatively affected. Typically, this can lead to that it is cumbersome to provide consistent braking during a relatively long time interval. For example, the braking devices may become overheated, and may need to be cooled down before they can provide adequate braking.

This is also relevant in the context of a vehicle that comprises one or more electric motor(s), wherein each electric motor is configured to drive one or more wheels of the vehicle but can also be used to provide braking force to one or more wheels of the vehicle. During braking by the electric motors (i.e., braking power being provided by the electric motors), electric energy is typically generated in the electric motor(s). The generated electric energy can cause heating of the corresponding electric motor, which may negatively affect its functionality (e.g., its braking functionality). Thereby, the period of time during which endurance braking can be properly applied may be limited. Typically, there is a maximum temperature (e.g., defined by the cooling system of the electric motor) that an electric motor is configured to endure continuously without performance problems. If excess energy is transferred to an energy storing system (e.g., a battery arrangement) to mitigate the heating, such mitigation is only possible while the energy storing system is able to receive energy for storing. For example, the energy storing system may have a maximum rate at which it is able to receive energy for storing. Furthermore, if the energy storing system is full it cannot receive any excess energy generated by the electric motors.

Some approaches discussed herein suggest that at least some of the energy generated by using the electric motor(s) for braking is otherwise dispersed to avoid heating of the electric motor(s). Thereby, the time interval during which it is possible to provide consistent braking by the electric motor(s) is prolonged.

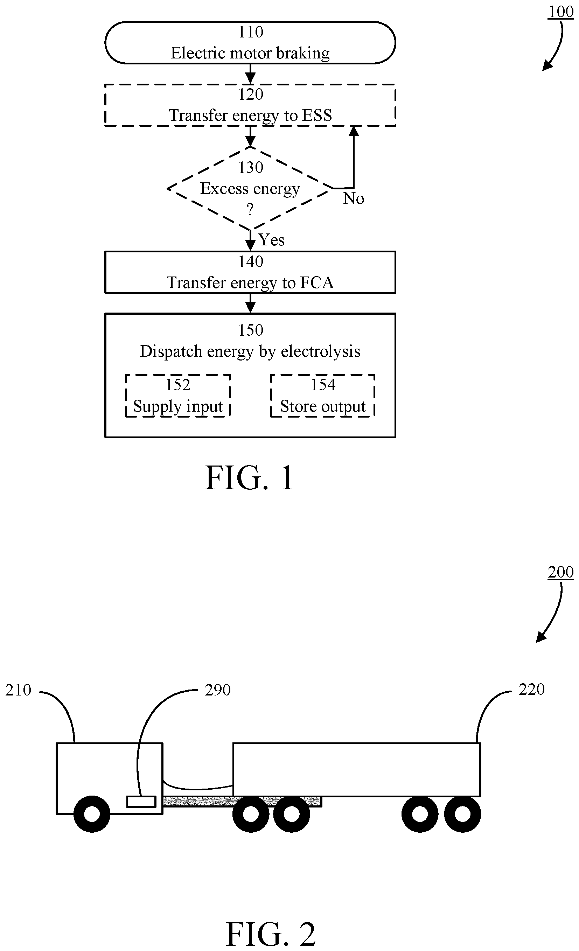

**FIG. 1** illustrates a method **100** according to some examples. The method **100** is suitable for enabling prolonged endurance braking for a vehicle, wherein the vehicle comprises one or more electric motor(s) and a fuel cell arrangement (FCA) configured to drive the electric motor(s). As illustrated by **110,** the method **100** is applied during braking by the electric motor(s).

The method **100** comprises transferring electric energy generated by the electric motor(s) during the braking away from the electric motor(s). Thereby, heating of the electric motor(s) is reduced and the time interval during which it is possible to provide consistent braking by the electric motor(s) is prolonged. The transferred electric energy is preferably dispatched or stored at a destination of the transfer.

As illustrated by step **140,** the electric energy generated by the electric motor(s) during the braking may be transferred from the electric motor(s) to the fuel cell arrangement, where it can be dispatched by causing the fuel cell arrangement to perform electrolysis driven by the transferred electric energy, as illustrated by step **150.** Thus, the electric energy generated by the electric motor(s) during braking may be dissipated/dispersed by running the fuel cell arrangement "backwards" or "in reverse" (compared to its default operation) so that it performs electrolysis, thereby dispatching energy.

Generally, the default operation of a fuel cell arrangement may be defined as an operation mode wherein the fuel cell arrangement generates electric energy while transforming input material (e.g., oxygen and hydrogen) to output material (e.g., water), and the reverse operation of the fuel cell arrangement may be defined as an operation mode wherein the fuel cell arrangement consumes energy to perform electrolysis.

Step **150** may comprise detecting energy transfer towards the fuel cell arrangement, thereby indirectly detecting a need to disperse energy generated by the electric motor(s) during braking, and triggering the electrolysis responsive to the detection.

In some examples, the electric energy generated by the electric motor(s) during the braking may be primarily transferred from the electric motor(s) to an energy storing system (ESS; e.g., a battery) of the vehicle, as illustrated by optional step **120,** where it can be stored for later use (e.g., by the electric motor(s) when driving the wheel(s)). In such examples, electric energy generated by the electric motor(s) during the braking may be transferred to the fuel cell arrangement if (e.g., only if) the energy storing system is unable to receive that energy for storage. For example, the fuel cell arrangement may receive electric energy generated by the electric motor(s) during the braking responsive to the energy storing system being saturated (e.g., fully charged battery), and/or responsive to the transferred electric energy representing a power that exceeds a maximum reception rate of the energy storing system (e.g., maximum charging rate of battery). Thus, (only) excess energy may be transferred to the fuel cell arrangement, which is illustrated by optional step **130.**

It should be noted that other ways to dispatch or store electric energy transferred from the electric motor(s) may be combined with the approach presented by the method **100.** For example, the electric energy generated by the electric motor(s) during the braking may be transferred from the electric motor(s) to an internal combustion engine (ICE), where it can be dispatched by operating the ICE in reverse to compress air. This and/or other energy dispatch approaches may replace, or be used in addition to, the optional step **120** of the method **100.**

The electrolysis of step **150** may be any suitable electrolysis. For example, the electrolysis may be configured to convert water to oxygen and hydrogen.

Step **150** may further comprise supplying input material (e.g., water) for the electrolysis, as illustrated by optional sub-step **152.** For example, the input material may be supplied from an on-board tank configured to carry the input material (e.g., a water tank).

The input material may be replenished in any suitable way. For example, an on-board tank may receive input material (e.g., water) by restocking when the vehicle is at halt. Alternatively or additionally, the input material may comprise one or more residual product from vehicle operation (which may be received by an on-board tank, or may be used directly). For example, water as input material may be replenished by using water vapor from default operation of the fuel cell arrangement.

Step **150** may further comprise storing output material (e.g., oxygen and/or hydrogen) of the electrolysis, as illustrated by optional sub-step **154.** For example, the output material may be stored in one or more corresponding tank(s) configured to carry the respective output material (e.g., a hydrogen tank and an oxygen tank). Storing of hydrogen is preferable for safety reasons, since releasing it would typically entail an explosion risk.

Stored output material may be used for any suitable purpose(s), and/or may simply be emptied when the vehicle is at halt. For example, stored oxygen and/or hydrogen may be used for default operation of the fuel cell arrangement. Using stored oxygen for default operation of the fuel cell arrangement typically entails increased efficiency of the fuel cell compared to if air was used. Using stored hydrogen for default operation of the fuel cell arrangement typically leads to that restocking of hydrogen can be performed more seldom than otherwise. Alternatively or additionally, stored oxygen may be used to drive hydraulics of the vehicle, which may - at least if the stored oxygen is pressurized - improve (reduce) the reaction time of the hydraulics. Yet alternatively or additionally, oxygen as output material of the electrolysis may be released directly into the ambient air (e.g., when there is not oxygen tank, or when the oxygen tank is full).

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **220** in a known manner. The tractor unit **210** and/or the trailer unit(s) **220** may comprise a vehicle control unit (VCU) **290** configured to perform various vehicle control functions, such as vehicle motion management (VMM), power/energy management, etc. For example, any of one or more VCU(s) **290** may be configured to perform, or cause performance of, one or more steps of the method **100** of **FIG. 1****.** Thus, the techniques disclosed herein may be performed by any of one or more VCU(s) **290** of the vehicle **200.**

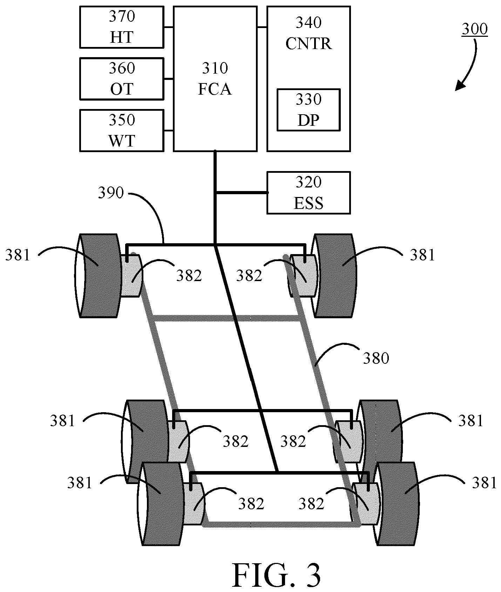

**FIG. 3** schematically illustrates a vehicle sub-system **300** according to some examples. For example, the vehicle sub-system **300** may be configured to perform one or more steps of the method **100** of **FIG. 1****.** Alternatively or additionally, the vehicle sub-system **300** may be comprised in a vehicle (e.g., the vehicle **200** of **FIG. 2**).

The vehicle-subsystem **300** is particularly suitable for a vehicle platform, which is also schematically illustrated in **FIG. 3****.**

According to the vehicle platform, wheels **381** are mounted in relation to a frame structure **390,** and one or a plurality of electric motors **382** are provided for driving the wheels. For example, each electric motor **382** may be mounted in direct association with a respective wheel **381** (e.g., electric motor mounted on the respective wheel), thereby enabling individual wheel drive. However, other mounting approaches for the electric motors are possible (e.g., an electric motor being mounted in association with a corresponding wheel axle and configured to drive the wheels of that axle, an electric motor being mounted to enable it to drive two or more wheels of one side of the vehicle, etc.).

In the context of the vehicle platform, there is provided one or more power unit(s) configured to drive the electric motor(s) **382.** Various types of power units include (but are not limited to: a fuel cell arrangement, an internal combustion engine, and a battery pack. In some examples, the vehicle platform may provide a power unit interface configured to receive a power unit, whereby different types of power units can be utilized for the same vehicle platform.

The power unit(s) may drive the electric motor(s) **382** by directly supplying electric power/energy to the electric motor(s) and/or by supplying electric power/energy to an energy storing system (ESS) **320,** which in turn supplies electric power/energy to the electric motor(s).

For application of the approaches suggested herein, the vehicle platform is configured to have a fuel cell arrangement (FCA) **310** as power unit. The vehicle platform may be configured to have only a fuel cell arrangement **310** as power unit. Alternatively, the vehicle platform may be configured to have a fuel cell arrangement **310** as power unit in addition to one or more other types of power unit. For example, the power unit interface may be configured to receive and hold a fuel cell arrangement as well as one or more other types of power unit; either in parallel or one at a time.

Generally, the vehicle sub-system **300** is suitable for enabling prolonged endurance braking for a vehicle, wherein the vehicle comprises one or more electric motor(s) **382** and a fuel cell arrangement **310** configured to drive the electric motor(s).

The vehicle sub-system **300** comprises a transfer network **390** configured to transfer electric energy, generated by the electric motor(s) **382** during braking by the electric motor(s), from the electric motor(s) to the fuel cell arrangement **310.** The transfer network **390** may be implemented in any suitable way (e.g., using electric wiring). For example, an energy transfer network configured to supply the electric motor(s) **382** with electric energy generated by the fuel cell arrangement, or a duplicate thereof, may be used as the transfer network **390.** Optionally, the transfer network **390** may comprise, or be associated with, a controller (e.g., controlling circuitry or a control module) configured to cause the energy transfer from the electric motor(s) to the fuel cell arrangement responsive to the braking.

The vehicle sub-system **300** also comprises a dispatcher (DP) **330** configured to cause the fuel cell arrangement **310** to perform electrolysis driven by the transferred electric energy. For example, the dispatcher **330** may be comprised in a controller (CNTR; e.g., controlling circuitry or a control module) **340.** The dispatcher **330** may be implemented by hardware (e.g., switching means) and/or software (e.g., an electrolysis triggering module running on processing circuitry). The dispatcher **330** may be configured to trigger electrolysis by the fuel cell arrangement **310** responsive to detection of energy transfer to the fuel cell arrangement.

In some examples, the vehicle sub-system **300** further comprises the electric motor(s) 382 and/or the fuel cell arrangement **310.**

Alternatively or additionally, in some examples, the vehicle sub-system **300** further comprises an on-board water tank (WT) **350** for supplying water to be converted to oxygen and hydrogen by the electrolysis.

Yet alternatively or additionally, in some examples, the vehicle sub-system **300** further comprises an oxygen tank (OT) **360** for storing oxygen produced by the electrolysis and/or a hydrogen tank (HT) **370** for storing hydrogen produced by the electrolysis.

Yet alternatively or additionally, in some examples, the vehicle sub-system **300** further comprises an energy storing system (ESS) **320,** wherein the transfer network **390** is further configured to transfer electric energy generated by the electric motor(s) **382** during braking from the electric motor(s) to the energy storing system. For example, the transfer network **390** may be configured to primarily transfer electric energy generated by the electric motor(s) **382** during braking from the electric motor(s) to the energy storing system, and to transfer - from the electric motor(s) to the fuel cell arrangement - only electric energy generated by the electric motor(s) during the braking that the energy storing system is unable to receive for storage.

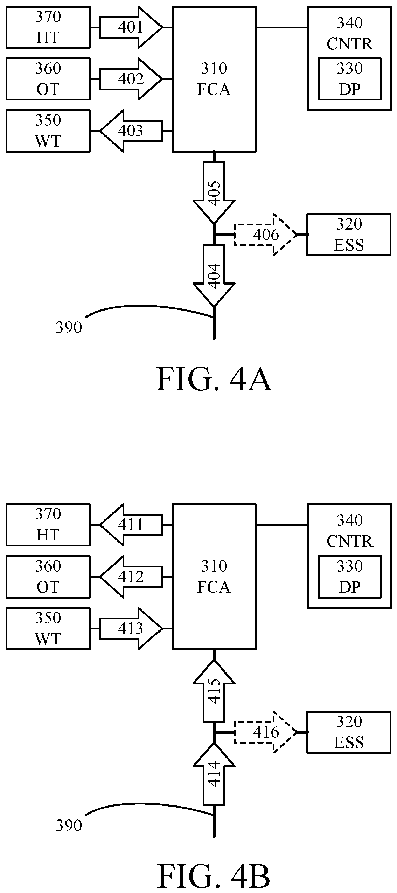

**FIG. 4A** schematically illustrates various flows during default operation of a fuel cell arrangement (FCA) **310** according to some examples. For example, **FIG. 4A** may be seen as exemplifying an operation mode of the vehicle sub-system of **FIG. 3****.** During default operation of the FCA **310,** hydrogen is supplied to the FCA **310** as illustrated by **401** and oxygen is supplied to the FCA **310** as illustrated by **402.** The FCA **310** generates energy as illustrated by **405** and outputs water as a residual product as illustrated by **403.** The generated energy may be transferred over a transfer network **390** (e.g., to be used for driving electric motor(s)) as illustrated by **404.** Alternatively or additionally, the generated energy may be input to an energy storing system **320** as illustrated by **406.**

**FIG. 4B** schematically illustrates various flows during operation of the fuel cell arrangement (FCA) **310** for prolonged endurance braking according to some examples. For example, **FIG. 4B** may be seen as exemplifying an operation mode of the vehicle sub-system of **FIG. 3**. During operation of the FCA **310** for prolonged endurance braking, water is supplied to the FCA **310** as illustrated by **413.** The FCA **310** performs electrolysis and outputs hydrogen and oxygen as a residual products as illustrated by **411** and **412.** The electrolysis is driven by energy (e.g., generated by electric motor(s) during braking) transferred to the FCA **310** over a transfer network **390** as illustrated by **415.** The electrolysis is controlled by a dispatcher **330,** and may be triggered responsive to detection of the energy flow **415.** The energy flow **415** may correspond directly to an energy flow **414** of the transfer network **390,** or - when the transfer network **390** is configured to transfer energy also to an energy storing system **320** as illustrated by **416** - the energy flow **415** may correspond to a portion of the energy flow **414,** which an energy storing system **320** is unable to receive for storage.

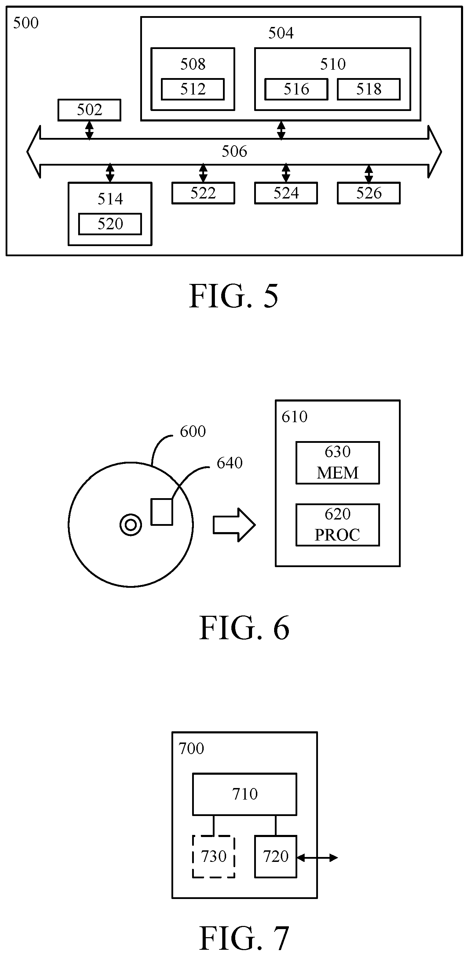

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., randomaccess memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device
interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system 500 may include a communications interface 526 suitable for communicating with a network as appropriate or desired.

According to some examples, the computer system **500** may be suitable for enabling prolonged endurance braking for a vehicle), wherein the vehicle comprises one or more electric motor(s) and a fuel cell arrangement configured to drive the electric motor(s), by causing - during braking by the electric motor(s) - transfer, from the electric motor(s) to the fuel cell arrangement, of electric energy or power generated by the electric motor(s) during the braking, and dispatch of the transferred electric energy or power by causing the fuel cell arrangement to perform electrolysis driven by the transferred electric energy or power.

For example, the computer system **500** may be configured to perform, or cause performance of, one or more steps of the method **100** of **FIG. 1**. Alternatively or additionally, the computer system **500** may be comprised in, or comprise, one or more VCU(s). Yet alternatively or additionally, the computer system **500** may be comprised in a vehicle (e.g., the vehicle **200** of **FIG. 2****).**

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product exemplified as a non-transitory computer-readable medium in the form of a compact disc (CD) ROM **600.** The computer-readable medium has stored thereon program code **640** comprising instructions. The program code is loadable into processing circuitry (PROC; e.g., a data processing unit) **620,** which may, for example, be comprised in a control unit **610.** When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in the vehicle **200;** e.g., in the form of a VCU **150.** Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit **700** to perform a set of operations, or steps, such as the method discussed in connection to **FIG. 1****.**

Consequently, there is disclosed herein a control unit **700** for a heavy-duty vehicle **200,** wherein the vehicle comprises one or more electric motor(s) and a fuel cell arrangement configured to drive the electric motor(s), and wherein the control unit is configured to enable prolonged endurance braking for the vehicle, by causing - during braking by the electric motor(s) - transfer (from the electric motor(s) to the fuel cell arrangement) electric energy or power generated by the electric motor(s) during the braking, and dispatch of the transferred electric energy or power by causing the fuel cell arrangement to perform electrolysis driven by the transferred electric energy or power.

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for controlling an articulated vehicle **200** comprising a tractor **210** and/or one or more towed vehicle units **220,** the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

### A non-exhaustive list of examples:

**Example 1:** A method for enabling prolonged endurance braking for a vehicle, wherein the vehicle comprises one or more electric motor(s) and a fuel cell arrangement configured to drive the electric motor(s), the method comprising, during braking by the electric motor(s): transferring, from the electric motor(s) to the fuel cell arrangement, electric energy or power generated by the electric motor(s) during the braking, and dispatching the transferred electric energy or power by causing the fuel cell arrangement to perform electrolysis driven by the transferred electric energy or power.

**Example 2:** The method of **Example 1,** wherein performing the electrolysis comprises converting water to oxygen and hydrogen.

**Example 3:** The method of **Example 2**, further comprising supplying the water from an on-board water tank.

**Example 4:** The method of any of **Examples 2-3,** further comprising using water vapor from default operation of the fuel cell arrangement to supply the water.

**Example 5:** The method of any of **Examples 2-4,** further comprising storing the oxygen and/or the hydrogen in corresponding tank(s).

**Example 6:** The method of **Example 5**, further comprising using the stored oxygen and/or hydrogen for default operation of the fuel cell arrangement.

**Example 7:** The method of any of **Examples 5-6,** further comprising using the stored oxygen to drive hydraulics of the vehicle.

**Example 8:** The method of any of **Examples 1-7,** further comprising, during braking by the electric motor(s): transferring, from the electric motor(s) to an energy storing system of the vehicle, electric energy or power generated by the electric motor(s) during the braking, wherein the transferring, from the electric motor(s) to the fuel cell arrangement, of electric energy or power generated by the electric motor(s) during the braking is applied for generated electric energy or power that the energy storing system is unable to receive for storage.

**Example 9:** The method of any of **Examples 1-8,** wherein the method is controlled by processing circuitry of a computer system.

**Example 10:** A computer program product comprising program code for performing, when executed by processing circuitry, the method of **Example 9.**

**Example 11:** A non-transitory computer-readable storage medium comprising instructions, which when executed by processing circuitry, cause the method of **Example 9** to be performed.

**Example 12:** A computer system for enabling prolonged endurance braking for a vehicle, wherein the vehicle comprises one or more electric motor(s) and a fuel cell arrangement configured to drive the electric motor(s), the computer system comprising processing circuitry configured to cause, during braking by the electric motor(s): transfer, from the electric motor(s) to the fuel cell arrangement, of electric energy or power generated by the electric motor(s) during the braking, and dispatch of the transferred electric energy or power by causing the fuel cell arrangement to perform electrolysis driven by the transferred electric energy or power.

**Example 13:** The computer system of **Example 12,** wherein performing the electrolysis comprises converting water to oxygen and hydrogen.

**Example 14:** The computer system of **Example 13,** wherein the processing circuitry is further configured to cause supplying of the water from an on-board water tank.

**Example 15:** The computer system of any of **Examples 13-14,** wherein the processing circuitry is further configured to cause use of water vapor from default operation of the fuel cell arrangement to supply the water.

**Example 16:** The computer system of any of **Examples 13-15,** wherein the processing circuitry is further configured to cause storing of the oxygen and/or the hydrogen in corresponding tank(s).

**Example 17:** The computer system of **Example 16,** wherein the processing circuitry is further configured to cause use of the stored oxygen and/or hydrogen for default operation of the fuel cell arrangement.

**Example 18:** The computer system of any of **Examples 16-17,** wherein the processing circuitry is further configured to cause use of the stored oxygen to drive hydraulics of the vehicle.

**Example 19:** The computer system of any of **Examples 12-18,** wherein the processing circuitry is further configured to cause, during braking by the electric motor(s): transfer, from the electric motor(s) to an energy storing system of the vehicle, of electric energy or power generated by the electric motor(s) during the braking, wherein the transfer, from the electric motor(s) to the fuel cell arrangement, of electric energy or power generated by the electric motor(s) during the braking is applied for generated electric energy or power that the energy storing system is unable to receive for storage.

**Example 20:** A vehicle sub-system for enabling prolonged endurance braking for a vehicle, wherein the vehicle comprises one or more electric motor(s) and a fuel cell arrangement configured to drive the electric motor(s), the vehicle sub-system comprising: a transfer network configured to transfer, from the electric motor(s) to the fuel cell arrangement, electric energy or power generated by the electric motor(s) during braking by the electric motor(s), and an energy or power dispatcher configured to cause the fuel cell arrangement to perform electrolysis driven by the transferred electric energy or power.

**Example 21:** The vehicle sub-system of **Example 20,** further comprising one or more of: the electric motor(s), the fuel cell arrangement, an on-board water tank for supplying water to be converted to oxygen and hydrogen by the electrolysis, and respective tank(s) for storing oxygen and/or hydrogen produced by the electrolysis.

**Example 22:** The vehicle sub-system of any of **Examples 20-21,** further comprising an energy storing system, wherein the transfer network is further configured to transfer, from the electric motor(s) to the energy storing system of the vehicle, electric energy or power generated by the electric motor(s) during the braking, and to transfer, from the electric motor(s) to the fuel cell arrangement, only electric energy or power generated by the electric motor(s) during the braking that the energy storing system is unable to receive for storage.

**Example 23:** A vehicle comprising the computer system of any of **Examples 12-19** and/or the vehicle sub-system of any of **Examples 20-22.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method (100) for enabling prolonged endurance braking for a vehicle (200), wherein the vehicle comprises one or more electric motor(s) (382) and a fuel cell arrangement (310) configured to drive the electric motor(s), the method comprising, during braking (110) by the electric motor(s):
transferring (140, 414, 415), from the electric motor(s) to the fuel cell arrangement, electric energy or power generated by the electric motor(s) during the braking; and
dispatching (150) the transferred electric energy or power by causing the fuel cell arrangement to perform electrolysis driven by the transferred electric energy or power.

2. The method of claim 1, wherein performing the electrolysis comprises converting water to oxygen and hydrogen.

3. The method of claim 2, further comprising supplying (152, 413) the water from an on-board water tank (350).

4. The method of any of claims 2-3, further comprising using water vapor from default operation of the fuel cell arrangement to supply (152) the water.

5. The method of any of claims 2-4, further comprising storing (154, 411, 412) the oxygen and/or the hydrogen in corresponding tank(s) (360, 370).

6. The method of claim 5, further comprising using the stored oxygen and/or hydrogen for default operation of the fuel cell arrangement.

7. The method of any of claims 5-6, further comprising using the stored oxygen to drive hydraulics of the vehicle.

8. The method of any of claims 1-7, further comprising, during braking by the electric motor(s):
transferring (120, 414, 416), from the electric motor(s) to an energy storing system (320) of the vehicle, electric energy or power generated by the electric motor(s) during the braking,
wherein the transferring (140, 414, 415), from the electric motor(s) to the fuel cell arrangement, of electric energy or power generated by the electric motor(s) during the braking is applied (130) for generated electric energy or power that the energy storing system is unable to receive for storage.

9. The method of any of claims 1-8, wherein the method (100) is controlled by processing circuitry (290, 340, 620) of a computer system (500).

10. A computer program product (600) comprising program code for performing, when executed by processing circuitry (290, 340, 620), the method of claim 9.

11. A non-transitory computer-readable storage medium (600) comprising instructions, which when executed by processing circuitry (290, 340, 620), cause the method of claim 9 to be performed.

12. A computer system (500) for enabling prolonged endurance braking for a vehicle (200), wherein the vehicle comprises one or more electric motor(s) (382) and a fuel cell arrangement (310) configured to drive the electric motor(s), the computer system comprising processing circuitry (290, 340, 620) configured to cause, during braking by the electric motor(s):
transfer, from the electric motor(s) to the fuel cell arrangement, of electric energy or power generated by the electric motor(s) during the braking; and
dispatch of the transferred electric energy or power by causing the fuel cell arrangement to perform electrolysis driven by the transferred electric energy or power.

13. A vehicle sub-system (300) for enabling prolonged endurance braking for a vehicle (200), wherein the vehicle comprises one or more electric motor(s) (382) and a fuel cell arrangement (310) configured to drive the electric motor(s), the vehicle sub-system comprising:
a transfer network (390) configured to transfer (414, 415), from the electric motor(s) to the fuel cell arrangement, electric energy or power generated by the electric motor(s) during braking by the electric motor(s); and
an energy or power dispatcher (330) configured to cause the fuel cell arrangement to perform electrolysis driven by the transferred electric energy or power.

14. The vehicle sub-system of claim 13, further comprising one or more of:
the electric motor(s) (382);
the fuel cell arrangement (310);
an on-board water tank (350) for supplying water to be converted to oxygen and hydrogen by the electrolysis;
respective tank(s) (360, 370) for storing oxygen and/or hydrogen produced by the electrolysis; and
an energy storing system (320), wherein the transfer network is further configured to transfer (414, 416), from the electric motor(s) to the energy storing system of the vehicle, electric energy or power generated by the electric motor(s) during the braking, and to transfer (414, 415), from the electric motor(s) to the fuel cell arrangement, only electric energy or power generated by the electric motor(s) during the braking that the energy storing system is unable to receive for storage.

15. A vehicle (200) comprising the computer system (500) of claim 12 and/or the vehicle sub-system (300) of any of claims 13-14.

## Amended claims

### Amended claims in accordance with Rule 137(2) EPC.

1. A method (100) for enabling prolonged endurance braking for a vehicle (200), wherein the vehicle comprises one or more electric motor(s) (382) and a fuel cell arrangement (310) configured to drive the electric motor(s), the method comprising, during braking (110) by the electric motor(s):
detecting, by processing circuitry (290, 340, 620) of a computer system (500), a need to disperse energy generated by the electric motor(s) during braking, wherein the need pertains to heating of the electric motor(s);
causing, by the processing circuitry, transfer (140, 414, 415), from the electric motor(s) via a transfer network (390) to the fuel cell arrangement, of electric energy or power generated by the electric motor(s) during the braking; and
triggering, by the processing circuitry and responsive to the detection, the fuel cell arrangement to perform electrolysis driven by the transferred electric energy or power, thereby dispatching (150) the transferred electric energy or power by the fuel cell arrangement and prolonging a time interval during which it is possible to provide consistent braking by the electric motor(s).

2. The method of claim 1, wherein performing the electrolysis comprises converting water to oxygen and hydrogen.

3. The method of claim 2, further comprising supplying (152, 413) the water from an on-board water tank (350).

4. The method of any of claims 2-3, further comprising using water vapor from default operation of the fuel cell arrangement to supply (152) the water.

5. The method of any of claims 2-4, further comprising storing (154, 411, 412) the oxygen and/or the hydrogen in corresponding tank(s) (360, 370).

6. The method of claim 5, further comprising using the stored oxygen and/or hydrogen for default operation of the fuel cell arrangement.

7. The method of any of claims 5-6, further comprising using the stored oxygen to drive hydraulics of the vehicle.

8. The method of any of claims 1-7, further comprising, during braking by the electric motor(s):
transferring (120, 414, 416), from the electric motor(s) to an energy storing system (320) of the vehicle, electric energy or power generated by the electric motor(s) during the braking,
wherein the transferring (140, 414, 415), from the electric motor(s) to the fuel cell arrangement, of electric energy or power generated by the electric motor(s) during the braking is applied (130) for generated electric energy or power that the energy storing system is unable to receive for storage.

9. A computer program product (600) comprising program code for performing, when executed by processing circuitry (290, 340, 620), the method of claim 1.

10. A non-transitory computer-readable storage medium (600) comprising instructions, which when executed by processing circuitry (290, 340, 620), cause the method of claim 1 to be performed.

11. A computer system (500) for enabling prolonged endurance braking for a vehicle (200), wherein the vehicle comprises one or more electric motor(s) (382) and a fuel cell arrangement (310) configured to drive the electric motor(s), the computer system comprising processing circuitry (290, 340, 620) configured to, during braking by the electric motor(s):
detect a need to a need to disperse energy generated by the electric motor(s) during braking, wherein the need pertains to heating of the electric motor(s);
cause transfer, from the electric motor(s) via a transfer network (390) to the fuel cell arrangement, of electric energy or power generated by the electric motor(s) during the braking; and
trigger, responsive to the detection, the fuel cell arrangement to perform electrolysis driven by the transferred electric energy or power, thereby dispatching the transferred electric energy or power by the fuel cell arrangement and prolonging a time interval during which it is possible to provide consistent braking by the electric motor(s).

12. A vehicle sub-system (300) for enabling prolonged endurance braking for a vehicle (200), wherein the vehicle comprises one or more electric motor(s) (382) and a fuel cell arrangement (310) configured to drive the electric motor(s), the vehicle sub-system comprising:
the computer system of claim 11; and
a transfer network (390) configured to transfer (414, 415), from the electric motor(s) to the fuel cell arrangement, electric energy or power generated by the electric motor(s) during braking by the electric motor(s);
wherein the computer system comprises an energy or power dispatcher (330) configured to cause the fuel cell arrangement to perform electrolysis driven by the transferred electric energy or power.

13. The vehicle sub-system of claim 12, further comprising one or more of:
the electric motor(s) (382);
the fuel cell arrangement (310);
an on-board water tank (350) for supplying water to be converted to oxygen and hydrogen by the electrolysis;
respective tank(s) (360, 370) for storing oxygen and/or hydrogen produced by the electrolysis; and
an energy storing system (320), wherein the transfer network is further configured to transfer (414, 416), from the electric motor(s) to the energy storing system of the vehicle, electric energy or power generated by the electric motor(s) during the braking, and to transfer (414, 415), from the electric motor(s) to the fuel cell arrangement, only electric energy or power generated by the electric motor(s) during the braking that the energy storing system is unable to receive for storage.

14. A vehicle (200) comprising the computer system (500) of claim 11 and/or the vehicle sub-system (300) of any of claims 12-13.
